Europäisches Patentamt

European Patent Office

Office européen des brevets

(19)

(11) Publication number: **0 261 914**
**A2**

(12) **EUROPEAN PATENT APPLICATION**

(21) Application number: **87308340.6**

(22) Date of filing: **21.09.87**

(51) Int. Cl.⁴: **H 05 H 1/34**
H 05 H 1/26, H 05 H 1/36

(30) Priority: **22.09.86 JP 224325/86**

(43) Date of publication of application:
**30.03.88 Bulletin 88/13**

(84) Designated Contracting States: **CH FR GB LI**

(71) Applicant: **KABUSHIKI KAISHA TOYOTA CHUO
KENKYUSHO
41-1, Aza Yokomichi Oaza Nagakute Nagakute-cho
Aichi-gun Aichi-ken, 480-11 (JP)**

(72) Inventor: **Sugimoto, Hisashi
1 Aza Senko Oaza Haruki Togo-cho
Aichi-gun Aichi-ken (JP)**

**Watanabe, Goro
Koupo Takaaki 207 814 Takayanagi-cho
Meito-ku Nagoya-shi Aichi-ken (JP)**

(74) Representative: **Rees, David Christopher et al
Kilburn & Strode 30 John Street
London WC1N 2DD (GB)**

(54) **Method and apparatus for generating a plasma arc.**

(57) A method and apparatus for generating a plasma arc for use in arc welding, arc transformation hardening, minute working, etc. A plasma gas used for generating the plasma arc includes xenon and up to 50% by volume of argon, neon and or helium. A tungsten electrode (12) having a diameter of 0.5 millimetres or less is used. Thus, an extremely low plasma arc current of 0.1 amperes or less can be produced in a stabilised manner.

FIG. 1

**Description**

## METHOD AND APPARATUS FOR GENERATING A PLASMA ARC

The present invention relates to a method and apparatus for generating a plasma arc which may be used for microplasma arc welding, arc transformation hardening of miniature parts, minute working etc.

In the recent frontier technical fields, miniaturisation of various device parts is required and also the development of welding techniques suitable for welding miniature parts having a thickness and a diameter of the order of microns is desired in the field of welding.

In order to weld miniature metal workpieces of the order of microns in size, electron beam welding, laser welding, and microplasma (needle arc) welding are used conventionally. The minimum weldable thickness of a plate-like (foil) workpiece at present is 20 microns (Published Examined Japanese Patent Application 3911/1985). The minimum weldable diameter of a wire is about 125 microns (E.F. Gorman et al.: Welding J., No. 11, 1966).

Electron beam welding machines and laser welding machines are both expensive and difficult to use industrially while a microplasma welding machine is relatively inexpensive as a kind of an arc welding machine and is easy to use.

However, the minimum current value available industrially at present to operate such microplasma arc welding devices is still 0.1 amperes. At this current level, edge-lapped stainless steel plates must be at least 25 microns thick to be welded and thinner plates (foils) are difficult to weld.

At present, a method of generating an arc current below 0.1 amperes in a stabilised manner cannot be realised.

It is an object of this invention to provide a method of generating a plasma arc using a very low current below 0.1 amperes in a stabilised manner.

It is another object of this invention to provide an apparatus which generates a plasma arc using a very low current below 0.1 amperes in a stabilised manner.

According to one aspect of the invention, there is provided a method of generating a plasma arc comprising the steps of: supplying a plasma gas to an electrode and applying a voltage to the electrode characterised in that the plasma gas comprises xenon gas optionally mixed with up to 50% by volume of at least one of argon, neon and helium, the electrode being principally of tungsten and having a diameter of not more than 0.5 millimetres.

According to another aspect of the invention, there is provided an apparatus for generating a plasma arc, characterised by a plasma arc torch including: a plasma nozzle for ejecting a plasma gas comprising xenon and optionally up to 50% by volume of at least one of argon, neon and helium; and electrode principally of tungsten having a diameter of not more than 0.5 millimetres and being disposed within the plasma nozzle; means for supplying a plasma gas to the plasma nozzle; and a pilot arc power source and a main power source both connected to the electrode and having a constant current characteristic for applying a voltage to the plasma arc torch.

Thus, the atmosphere in which the arc is generated includes a gas which is easy to ionize, a so-called low-ionizing voltage gas. The cathode electrode is of tungsten and is thin, so that it is easy for it to emit thermal electrons and so generate an arc. In this way a very low plasma arc current, not higher than 0.1 amperes, can be produced in a stabilised manner.

Preferably, the system includes a shielding nozzle for ejecting a shielding gas surrounding a plasma arc to be produced and means for supplying a shielding gas to the shielding nozzle and the method includes supplying a shielding gas for surrounding a plasma arc to be produced prior to the step of applying the voltage.

Preferably, there is a high frequency generator connected to the electrode for applying a high voltage to the electrode, e.g. at least 20 volts. Preferably, the main power source has a constant current characteristic in which an open circuit voltage is not less than 50 volts, and the range of current adjustment is between 0.001 and 3.0 amperes. Preferably, the pilot arc power source has a constant current characteristic in which an open circuit voltage is not less than 50 volts and the range of current adjustment is between 0.05 and 3.0 amperes.

Preferably, a cooling system is connected to the plasma nozzle.

An arrangement as described according to this invention is capable of forming a low current pilot arc of 0.1 - 1.0 amperes and an extremely low current plasma arc of 0.001 - 0.1 amperes.

Thus, in a system according to this invention, the minimum current required for generation of a pilot arc can be reduced to a value much less than the lower limit of that in the prior art and an extremely low current main arc having a value lower than 0.1 amperes, which has not been produced by the prior art, can be generated in a stabilised manner.

This is because the ionization voltage of xenon is low, arc discharge under an atmosphere of a xenon gas or a mixed gas of xenon and an inert gas is easier than under an argon gas in the prior art, and a reduction of the diameter of the tungsten electrode causes an extremely low current arc to raise easily the temperature of the electrode tip, so that thermal emission of electrons is easy and permits initiation and maintenance of an extremely low current arc.

The invention may be carried into practice in various ways and one embodiment will now be described by way of example with reference to the accompanying drawings in which:-

Figure 1 is a cross-sectional view showing one example of a plasma arc generator in accordance with the present invention;

Figure 2 is a diagram showing the relationship between plasma gas and plasma arc characteristic in the form of a graph of voltage against current;

Figure 3 is a diagram showing the relationship between the mixing ratio of xenon to argon as a plasma gas and the current value at which a pilot arc is generated;

Figure 4 is a diagram showing the relationship between the diameter of the tungsten electrode and the current value at which a pilot arc is generated;

Figure 5 is a diagram showing the source characteristic suitable for the pilot arc power source and the main power source in the form of a graph of voltage against current;

Figure 6 is a cross-sectional view similar to Figure 1 showing the apparatus in a welding mode;

Figure 7 is a perspective view of a weld between stainless steel foils achieved in accordance with the invention,

Figure 8 is a perspective view showing a weld being achieved;

Figure 9 is a perspective view of a weld between Nichrome wires; and

Figure 10 is a perspective view of a weld between stainless foils in a reference example 1.

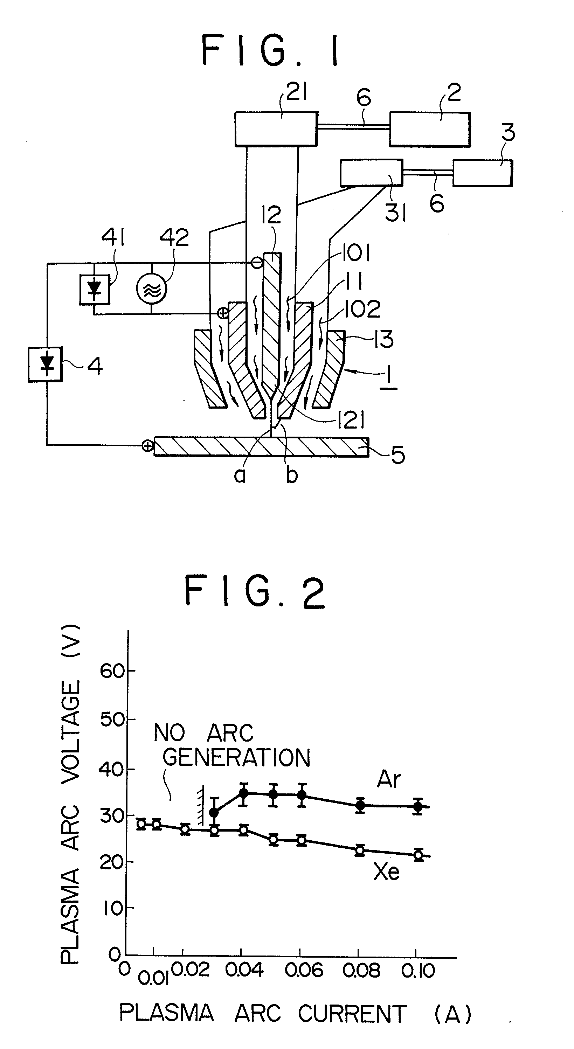

Figure 1 shows an example of a generator according to this invention which generates a transferred type main arc (plasma arc) a with a current not higher than 0.1 amperes between a plasma arc torch 1 and a material to be welded (a workpiece) 5. The apparatus includes the torch 1, a plasma gas supply 2, a shielding gas supply 3 and a main power source 4 having a constant current characteristic.

The plasma arc torch 1 includes a plasma nozzle 11 of a conductive material such as copper or copper chromium alloy, a tungsten electrode 12, and a shielding nozzle 13 which surrounds a produced plasma arc (main arc) a with a shielding gas 102. The plasma nozzle is preferably made of a copper alloy and has a diameter of from 0.2 to 1.0 millimetres.

The tungsten electrode 12 may be a conventional electrode made of tungsten containing 2% of $ThO_2$ or may be any tungsten electrode available commercially. In this invention, the tungsten electrode has a diameter of 0.5 millimeters or less. It is difficult for an electrode having a diameter larger than 0.5 millimetres to produce a plasma arc current below 0.1 amperes.

The electrode 12 and the plasma nozzle 11 are electrically isolated from and fixed to each other by means of an insulating member, not shown. The shielding nozzle is disposed coaxially with the plasma nozzle 11 to ensure that shielding gas 102 surrounds the main arc a. The shielding nozzle 13 is made of an insulating material such as a ceramic. The plasma nozzle 11 is cooled by a cooling system, not shown, to prevent overheating by the arc heat.

The plasma gas supply 2 includes a high-pressure gas cylinder or a gas supply installation using centralised piping and supplies plasma gas 101 by means of a pipe 6 to a gas regulator 21 which regulates a quantity of gas supplied to the plasma nozzle 11. Plasma gas is also supplied to the tungsten electrode 12 disposed within the plasma nozzle 11 and is directed to the tip 121 of the electrode 12. It is important to supply the plasma gas to the tip of the tungsten electrode which produces the arc in this way.

The shielding gas supply 3 includes a high-pressure gas cylinder or a gas supply installation using centralised tubing and supplies a shielding gas 102 by means of a pipe 6 to a gas regulator 31 which regulates a quantity of gas supplied to shielding nozzle 13. Any type of shielding gas may be used.

The flow rates of the plasma gas and shielding gas vary depending on the diameters of the ejection openings of the plasma nozzle and shielding nozzle, for example, when the plasma nozzle has an internal diameter of 0.5 millimeters, it is preferable that the flow rate of plasma gas is 0.02 - 0.5 litres/minute and the flow rate of shielding gas is 5 - 10 litres/minute.

The main power source 4 is connected to a pilot arc power source 41 and a high-frequency generator 42. The secondary negative poles of the pilot arc power source 41 and the main power source 4 are connected electrically to one output pole of the high-frequency generator 42 and the tungsten electrode 12 of the plasma arc torch 1. The secondary positive pole of the pilot arc power source 41 is connected electrically to the plasma nozzle 12 together with the other output pole of the high-frequency generator 42. The secondary positive pole of the main power source 4 is connected to the workpiece 5. The pilot arc power source 41, the main power source 4 and the high-frequency generator 42 are operated by turning on their primary inputs, not shown.

The above structure produces a plasma arc in the following manner.

Plasma gas 101 is supplied from the plasma gas supply means 2 to the plasma nozzle 11 and also to the tungsten electrode 12 within the plasma nozzle 11 so as to be led to the tip of the electrode 12. The gas is ejected by the nozzle 11. Shielding gas 102 is also supplied by the shielding gas supply 3 into the shielding nozzle 13 to cause this to eject the gas.

Under such conditions, the high-frequency generator 42, the main power source 4 and the pilot arc power source 41 operate together to generate a pilot arc b between the plasma nozzle 11 (which has a hollow structure) and the tungsten electrode 12. The pilot arc b causes a main arc a between the tungsten electrode 12 and the material to be welded (workpiece) 5.

The high-frequency generator 42 applies a high voltage in pulses to the tungsten electrode 12. In Figure 1, the high-frequency generator 42 is provided in parallel with the pilot arc 41, and both are connected to the electrode 12 and the plasma nozzle 11. The high-frequency generator may be omitted or may be provided separately outside the apparatus.

This invention uses as the plasma gas 101 ejected by the plasma nozzle 11, xenon, which has a low ionizing voltage or xenon mixed with another gas which may be one or more of argon, neon and helium gases.

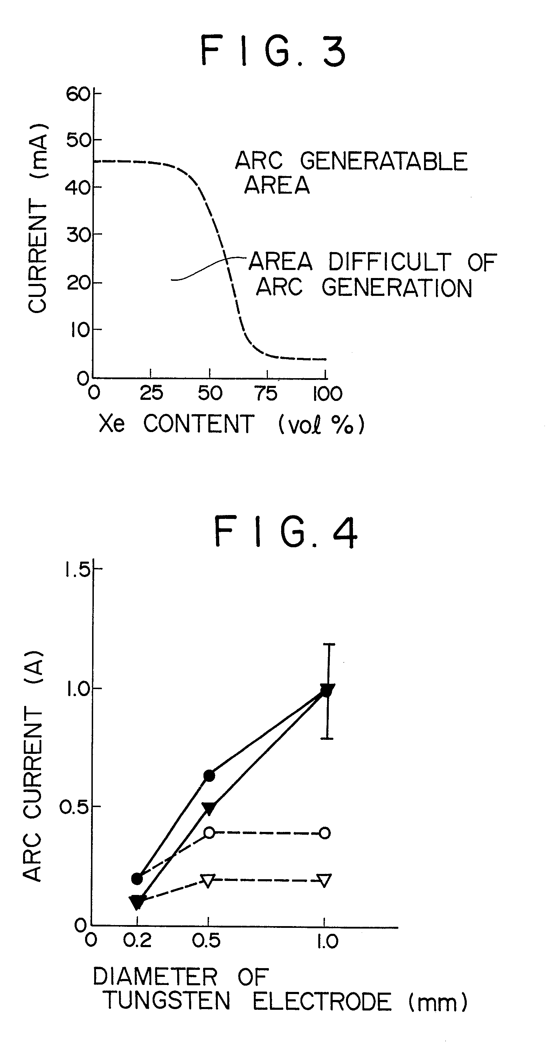

Part of the plasma gas is ejected from the plasma nozzle 101 as a plasma flame, not shown. The arc characteristics within the atmosphere of a plasma flame exhibit a substantially constant voltage up to a low current area and generate an extremely low current and a low voltage, as shown in Figure 2. This figure shows the characteristics in which a plasma gas of 100% argon (Ar) and a plasma gas of 100% of xenon (Xe) are used. In this case, the lowest generatable current values vary depending on the composition of the plasma gas used. For example, when the plasma gas is 100% argon, as is extensively used in the prior art, the lowest current is 45 milliamperes whereas when the plasma gas is 100% xenon (having a lower ionizing voltage than argon), the lowest current is 5 milliamperes. Figure 3 shows the relationship between the mixture ratio of a mixed gas consisting of argon and xenon and the generatable main arc current value. It can be seen from Figure 3 that an effective reduction of the current value occurs in the range of volume of xenon exceeding 50% by volume.

Reduction of the current value of the main arc is achieved by the generation of a plasma flame due to the pilot arc b, as described above. A problem however is the amount of heat produced by the plasma flame, which should be smaller than that produced by the main arc a; otherwise, the reduction of the main arc a would make no sense. To this end, it is necessary to reduce the current value of pilot arc b itself.

In this respect, various tests and studies have shown that the start-up of the pilot arc b and the minimum current for maintaining the arc are greatly influenced by the diameter of the tungsten electrode 12 and the kind of plasma gas 101, as shown in Figure 4.

In Figure 4, black dots denote the minimum current with which the pilot arc can start when Ar is used, black triangles denote the equivalent current when Xe is used, white circles denote the minimum current for maintaining a pilot arc when Ar is used, and white triangles denote the minimum current for maintaining a pilot arc when Xe is used. When an extremely low current arc is to be used, even arc start up should be accomplished with a low current. The appearance of the effect has been ascertained to correspond to the use of a tungsten electrode having a diameter of 0.5 millimetres or less and the use of xenon or a xenon mixed gas as the plasma gas 101.

The main power source 4 should have a constant current characteristic having an open circuit voltage of 50 volts or more and an allowable current range of 0.001 - 3.0 amperes. The pilot arc power source 41 should have a constant current characteristic having an open circuit voltage of 50 volts or more and an allowable current range of 0.05 - 3.0 amperes. The voltage applied to the tungsten electrode should be 20 volts or more.

Examples illustrating the present invention will now be described.

Example 1:

Two stainless steel foils were welded using the plasma arc generator shown in Figure 1.

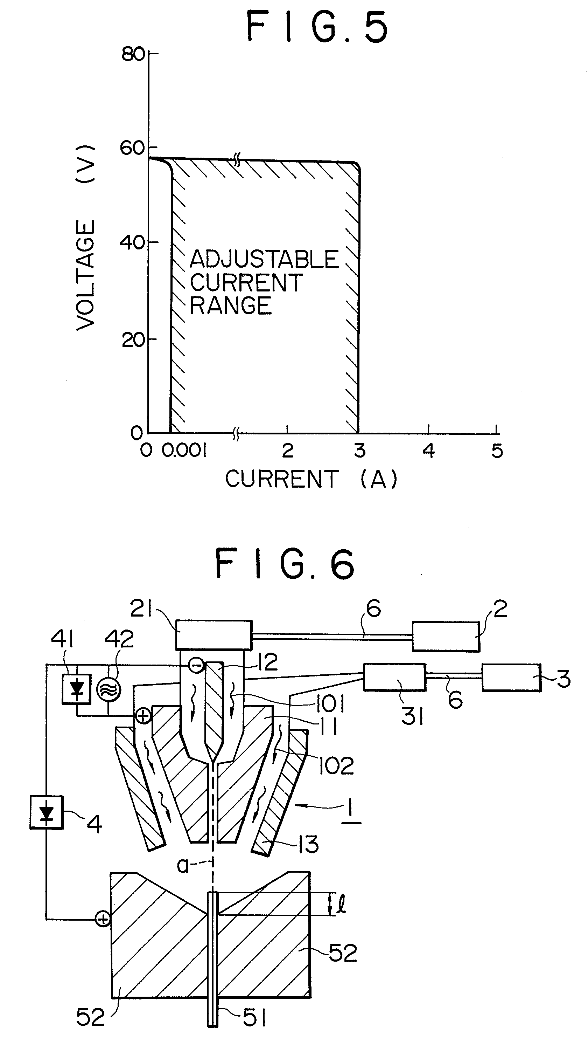

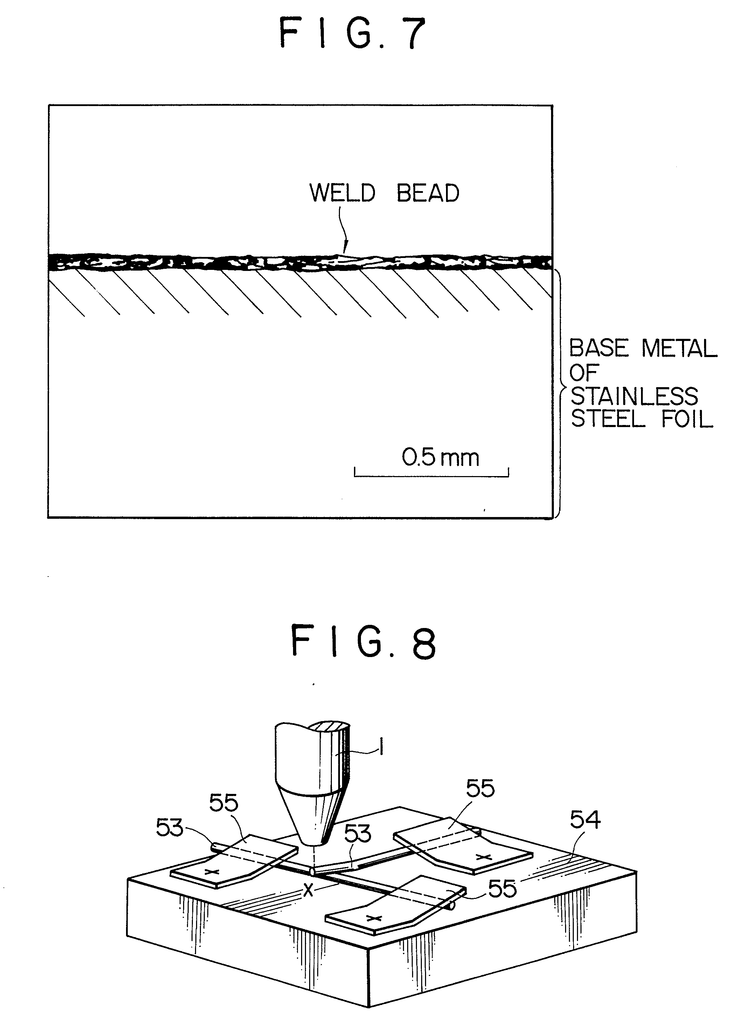

As workpieces, two SUS 304 stainless steel foils 51 were used. As shown in Figure 6, two lapped stainless foils were fixed by a pair of copper clamping members 52 with a protrusion $\ell = 0.5$ millimetres. Gas cylinders were used as the plasma gas supply 2 and the shielding gas supply 3 (this also applies to the subsequent examples). As plasma gas 101, 100% xenon was supplied at a flow rate of 0.05 litres/minute; the tungsten electrode 12 was 0.2 millimetres in diameter and contained 2% of $ThO_2$; the shielding gas 102 used, consisting of argon and 7% of hydrogen, was supplied at a flow rate of 6 litres/min. The welding was performed at 0.35 amperes pilot arc current and 50 milliamperes main arc current, at a welding rate of 10 centimetres/minute. As a result, as shown in Figure 7, an excellent bead-like weld was formed.

Example 2:

Two Nichrome wires were welded together using the plasma arc generator shown in Figure 1.

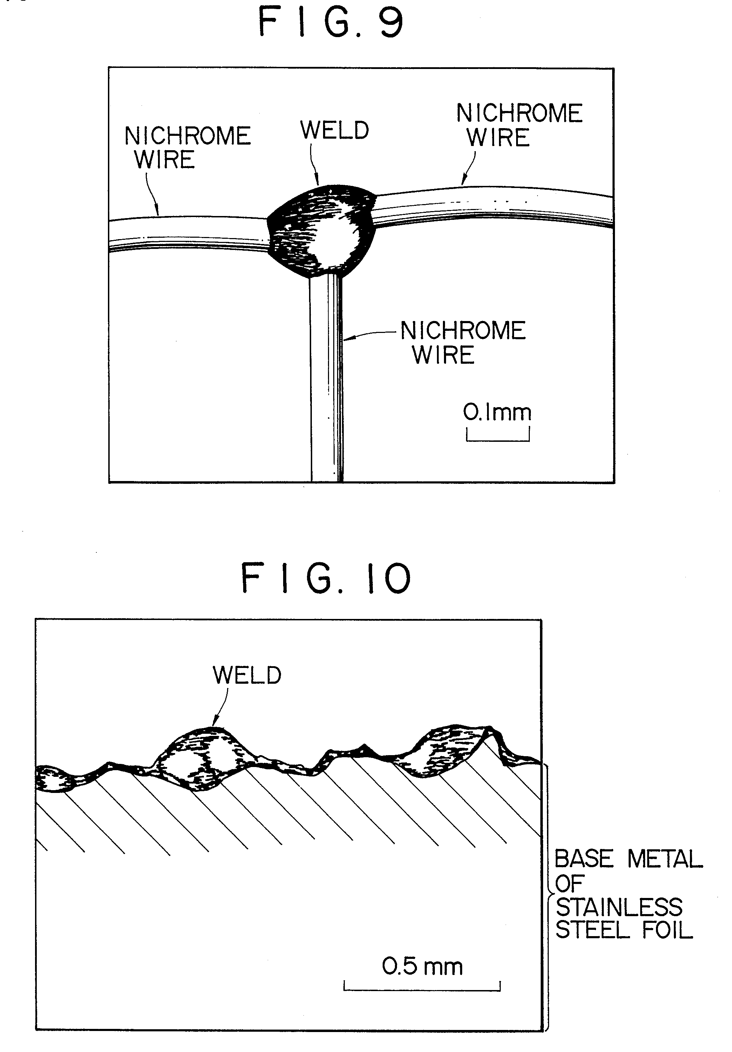

As shown in Figure 8, the plasma arc was applied to an intersection x where the two Nichrome wires 53 each having a diameter of 50 microns were disposed in contact with each other to form a T on a heat sink of copper plate 54. They were held in position by press members 55. A quantity of 100% xenon as the plasma gas was supplied at a flow rate of 0.05 litres/minute, a tungsten electrode 12 having a diameter of 0.2 millimetres and containing 2% of $ThO_2$ was used, and argon containing 7% of hydrogen as the shield gas was supplied at a flow rate of 6 litres/minute. Welding was performed at 0.35 amperes of pilot arc current and 30 milliamperes of main arc current for 4 seconds of arc time. As a result, an excellent T-like weld was formed as shown in Figure 9.

Reference Example 1:

Two lapped 5-microns thick SUS 304 stainless steel foils were welded in a manner similar to that of Example 1 except at welding conditions in which 100% argon as the plasma gas was supplied at a flow rate of 0.2 litres/minute, a tungsten electrode having a diameter of 1.0 millimetre and containing 2% of $ThO_2$ was used, the pilot arc current was 1.9 amperes, the main arc current was 90 milliamperes, and the welding speed was 20 centimetres/minute. As a result, a melt down weld as shown in Figure 10 was obtained.

Reference Example 2:

The T-like welding of two Nichrome wires having a diameter of 50 microns was performed in a manner similar to that of Reference Example 1 except that the pilot arc current was 0.6 amperes. As a result, the Nichrome wires were fused away instantaneously after the occurrence of the main arc and could not be welded.

**Claims**

1. A method of generating a plasma arc comprising the steps of: supplying a plasma gas (101) to an electrode (12) and applying a voltage to the electrode characterised in that the plasma gas comprises xenon gas optionally mixed with up to 50% by volume of at least one of argon, neon and helium, the electrode (12) being principally of tungsten and having a diameter of not more than 0.5 millimetres.

2. A method as claimed in Claim 1, characterised by supplying a shielding gas (102) for surrounding a plasma arc to be produced prior to the step of applying the voltage.

3. A method as claimed in Claim 1 or Claim 2, characterised in that the flow rate of the plasma gas is 0.02 to 0.5 litres/minute.

4. A method as claimed in any preceding claim characterised in that the voltage applied to the electrode (12) is not less than 20 volts.

5. Apparatus for generating a plasma arc, characterised by a plasma arc torch (1) including: a plasma nozzle (11) for ejecting a plasma gas (101) comprising xenon and optionally up to 50% by volume of at least one of argon, neon and helium; an electrode (12) principally of tungsten having a diameter of not more than 0.5 millimetres and being disposed within the plasma nozzle (11); means (2) for supplying a plasma gas (101) to the plasma nozzle; and a pilot arc power source (41) and a main power source (4) both connected to the electrode (12) and having a constant current characteristic for applying a voltage to the plasma arc torch.

6. Apparatus as claimed in Claim 5 characterised by a shielding nozzle (13) for ejecting a shielding gas (102) surrounding a plasma arc to be produced and means (3) for supplying a shielding gas (102) to the shielding nozzle (13).

7. Apparatus as claimed in Claim 5 or Claim 6 characterised by a high-frequency generator (42) connected to the electrode (12) for applying a high voltage to the electrode.

8. Apparatus as claimed in any of Claims 5 to 7 characterised in that the main power source (4) has a constant current characteristic in which an open circuit voltage is not less than 50 volts, and the range of current adjustment is between 0.001 and 3.0 amperes.

9. Apparatus as claimed in any of Claims 6 to 8 characterised in that the pilot arc power source (41) has a constant current characteristic in which an open circuit voltage is not less than 50 volts and the range of current adjustment is between 0.05 and 3.0 amperes.

10. Apparatus as claimed in any of Claims 5 to 9 characterised by a cooling system connected to the plasma nozzle.

# FIG. 1

# FIG. 2

PLASMA ARC VOLTAGE (V)

NO ARC
GENERATION

Ar

Xe

PLASMA ARC CURRENT (A)

0261914

# F I G . 3

# F I G. 4

0261914

# FIG. 5

# FIG. 6

0261914

# F I G . 7

WELD BEAD

BASE METAL OF STAINLESS STEEL FOIL

0.5 mm

# F I G . 8

## F I G. 9

NICHROME
WIRE

WELD

NICHROME
WIRE

NICHROME
WIRE

0.1mm

## F I G. IO

WELD

BASE METAL
OF
STAINLESS
STEEL FOIL

0.5 mm